# EUROPÄISCHE PATENTSCHRIFT

(11) **EP 3 806 660 B1**
(45) Veröffentlichungstag und Bekanntmachung des Hinweises auf die Patenterteilung: **09.07.2025**
(21) Anmeldenummer: 19758616.7
(22) Anmeldetag: 29.07.2019
(51) Int. Cl.: A23L 7/117, A23L 29/281, A23L 33/18, A23L 33/28

(54) **PROTEINRIEGEL**
PROTEIN BAR
BARRE PROTÉINÉE

(30) Priorität: 22.08.2018 DE 102018120420
(43) Veröffentlichungstag der Anmeldung: 21.04.2021
(73) Patentinhaber: GELITA AG, 69412 Eberbach (DE)
(72) Erfinder: GRÜBER, Anne-Sophie, 69117 Heidelberg (DE); HAHN, Martin, 48599 Gronau (DE); LANG, Elvira, 74080 Heilbronn (DE)
(74) Vertreter: Hoeger, Stellrecht & Partner Patentanwälte mbB
(86) Internationale Anmeldenummer: PCT/EP2019/070349
(87) Internationale Veröffentlichungsnummer: WO 2020/038685

(56) Entgegenhaltungen:
- WO-A1-2017/134245
- WO-A1-2018/041684
- DE-A1- 102007 002 295
- DE-A1- 102011 000 997
- DE-A1- 102012 110 612

## Beschreibung

Die vorliegende Erfindung betrifft einen Proteinriegel, der aus einer formbaren Masse gebildet ist, die Proteine und/oder Proteinhydrolysate enthält. Die Erfindung betrifft auch die Verwendung von Kollagenhydrolysat mit einem mittleren Molekular- gewicht von bis zu 1.700 Da zur Herstellung einer formbaren Masse für einen Proteinriegel.

WO 2018/041684 A1 offenbart einen Produkt. Das Kollagenhydrolysat als Bestandteil einer (Nahrungs-) Zusammensetzung mit verschiedenen weiteren Bestandteilen verabreicht wird. Proteinriegel erfreuen sich insbesondere bei Sportlern einer zunehmenden Beliebtheit. Sie ermöglichen die Zufuhr einer relativ großen Menge an Proteinen in Form eines handlichen, lagerfähigen und gut zu transportierenden Nahrungsmittels. Eine hohe Proteinzufuhr ist in Verbindung mit körperlicher Aktivität ernährungsphysiologisch sinnvoll, insbesondere mit dem Ziel einer Förderung des Muskelaufbaus.

Bei der Rezeptur von Proteinriegeln müssen mehrere Aspekte berücksichtigt werden, wobei die verschiedenen Anforderungen zum Teil in einem Konflikt stehen. Einerseits ist ein möglichst hoher Proteinanteil wünschenswert, wobei auf Kohlenhydrate und insbesondere auf Zucker unter ernährungsphysiologischen Gesichtspunkten möglichst verzichtet werden sollte. Andererseits muss die Rezeptur eine geeignete Konsistenz aufweisen, d.h. die aus den verschiedenen Bestandteilen gebildete Masse muss in dem Sinne formbar sein, dass ein dauerhaft formstabiler Riegel daraus gebildet werden kann. Der Riegel sollte also weder zerfließen noch zu leicht zerbrechen.

Ein weiterer wichtiger Aspekt sind der Geschmack und die Textur des Proteinriegels beim Beißen und Kauen. Um eine möglichst hohe Akzeptanz beim Verbraucher zu erreichen, sollten die Eigenschaften eines Proteinriegels in dieser Hinsicht so gut wie möglich an vergleichbare Genussmittel wie z.B. Schokoriegel angenähert werden. Dieses Ziel konnte allerdings bisher kaum erreicht werden, insbesondere nicht bei sehr hohen Proteinanteilen von über 60 Gew.%.

Der Erfindung liegt daher die Aufgabe zugrunde, einen Proteinriegel vorzuschlagen, dessen Masse gut formbar ist und der eine verbesserte, insbesondere weichere Textur aufweist.

Diese Aufgabe wird bei dem Proteinriegel der eingangs genannten Art erfindungsgemäß dadurch gelöst, dass die formbare Masse ein Kollagenhydrolysat mit einem mittleren Molekulargewicht von bis zu 1.700 Da als ein Proteinhydrolysat enthält und eine Dichte von 0,9 g/cm³ oder mehr aufweist.

Es hat sich überraschenderweise gezeigt, dass durch den Zusatz eines solchen Kollagenhydrolysats die Formbarkeit der Masse verbessert wird, d.h. die Masse wird weniger krümelig, und dass die Textur des Proteinriegels weicher wird, d.h. die Sensorik beim Verzehr wird verbessert.

Ein vergleichbarer Effekt kann interessanterweise durch bekannte Weichmacher wie etwa Glycerin, insbesondere bei Proteinriegeln mit einem hohen Proteinanteil, nicht erreicht werden.

Im Sinne der vorliegenden Erfindung bedeutet die Formulierung "aus einer formbaren Masse gebildet" nicht nur, dass die Ausgangsmasse die zur Formgebung des Riegels erforderliche Formbarkeit aufweist, sondern dass dieselbe Formbarkeit auch im erfindungsgemäßen Proteinriegel als Endprodukt noch vorliegt. Die Formbarkeit resultiert nämlich in der erwünschten Konsistenz und Textur des Proteinriegels beim Verzehr, wodurch sich der erfindungsgemäße Riegel insbesondere auch von anderen proteinhaltigen Snacks mit einer knackigen oder brüchigen Textur abgrenzt.

Für die Erzielung des erfindungsgemäßen Effektes ist das niedrige mittlere Molekulargewicht des eingesetzten Kollagenhydrolysats von 1.700 Da oder weniger entscheidend. Andere Kollagenhydrolysate, die gemäß dem Stand der Technik bereits vielfach wegen ihrer biologischen Aktivität in Nahrungsmitteln oder Nahrungsergänzungsmitteln eingesetzt werden, weisen typischerweise ein mittleres Molekulargewicht im Bereich von 2.000 bis 5.000 Da auf. Mit diesen Produkten kann die Textur des Proteinriegels nicht verbessert werden, zumindest nicht in einem nennenswerten Umfang.

Vorzugsweise weist das Kollagenhydrolysat ein mittleres Molekulargewicht von 800 bis 1.700 Da auf, weiter bevorzugt von 1.000 bis 1.500 Da. Sämtliche Angaben beziehen sich im Rahmen der vorliegenden Beschreibung auf das gewichtsmittlere Molekulargewicht des Kollagenhydrolysats. Dieses kann insbesondere mittels Gelpermeationschromatographie unter Verwendung von kalibrierten Standardpeptiden ermittelt werden.

Das Kollagenhydrolysat ist vorzugsweise durch enzymatische Hydrolyse eines kollagenhaltigen Ausgansmaterials hergestellt. Für diese Hydrolyse werden insbesondere Endopeptidasen oder Exopeptidasen mikrobiellen oder pflanzlichen Ursprungs eingesetzt. Durch geeignete Auswahl der Peptidasen und der Hydrolysebedingungen können Kollagenhydrolysate in dem jeweils benötigten Molekulargewichtsbereich hergestellt werden.

Das kollagenhaltige Ausgangsmaterial ist in der Regel ausgewählt aus Haut oder Knochen von Wirbeltieren, bevorzugt von Säugetieren oder Vögeln, und insbesondere aus der Haut von Rindern oder Schweinen (Rinderspalt bzw. Schweineschwarte). Alternativ kann das kollagenhaltige Ausgangsmaterial ausgewählt sein aus Haut, Knochen und/oder Schuppen von Fischen, insbesondere Kalt- oder Warmwasserfischen.

Das Kollagenhydrolysat kann entweder in einem einstufigen Verfahren aus diesen Ausgangsmaterialien hergestellt sein oder über die Zwischenstufe Gelatine, wobei in diesem Fall sowohl Gelatine vom Typ A als auch vom Typ B verwendet werden kann.

Alternativ kann das Kollagenhydrolysat für den erfindungsgemäßen Proteinriegel durch rekombinante Genexpression hergestellt sein. Durch den Einsatz von natürlichen Kollagensequenzen, insbesondere aus Rindern oder Schweinen, und deren Expression in gentechnisch modifizierten Zellen (z.B. Hefen, Bakterien oder Pflanzenzellen, insbesondere Tabak) können Produkte hergestellt werden, die mit den Hydrolyseprodukten der entsprechenden kollagenhaltigen Rohstoffe im Wesentlichen identisch sind. Dabei ist es möglich, eine engere bzw. exakt vorgegebene Molekulargewichtsverteilung zu erhalten.

Der Anteil des Kollagenhydrolysats in der formbaren Masse liegt günstigerweise im Bereich von 5 bis 50 Gew.%, bevorzugt im Bereich von 30 bis 50 Gew.%. Dabei ist es insbesondere von der sonstigen Zusammensetzung der formbaren Masse abhängig, welcher der Anteil an Kollagenhydrolysat zur Verbesserung der Textur erforderlich ist. Insbesondere bei einem hohen Gesamtproteinanteil wird häufig auch ein höherer Anteil an Kollagenhydrolysat eingesetzt werden. Andererseits kann es auch wünschenswert sein, den Anteil an Kollagenhydrolysat unabhängig von der Texturverbesserung weiter zu erhöhen, um ernährungsphysiologische Vorteile des Kollagenhydrolysats zu nutzen, insbesondere dessen bioaktive Wirkung auf die Knochen und Gelenke.

Der Gesamtproteinanteil des erfindungsgemäßen Proteinriegels kann über einen weiten Bereich variieren, wobei die weichmachende Wirkung des niedermolekularen Kollagenhydrolysats auch schon bei relativ niedrigen Proteinanteilen zum Tragen kommt. Aufgrund dieses Effektes können gemäß der Erfindung aber auch hohe Proteinanteile realisiert werden, die ohne den erfindungsgemäßen Zusatz von Kollagenhydrolysat zu nicht formbaren oder ungenießbaren (zu harten) Massen führen würden. Gemäß einer vorteilhaften Ausführungsform der Erfindung enthält die formbare Masse daher eine Gesamtmenge an Proteinen und/oder Proteinhydrolysaten von mindestens 50 Gew.% der formbaren Masse, bevorzugt von mindestens 60 Gew.%, weiter bevorzugt von mindestens 65 Gew.%.

Die oben genannten Mengenanteile beziehen sich stets auf die Masse der reinen Proteine oder Proteinhydrolysate, d.h. nach Abzug eines etwaigen Wassergehaltes der eingesetzten Komponenten.

Die formbare Masse enthält günstigerweise neben dem Kollagenhydrolysat ein oder mehrere Proteine und/oder Proteinhydrolysate, insbesondere im Fall eines hohen Gesamtproteinanteils. Diese können insbesondere unter ernährungsphysiologischen Gesichtspunkten ausgewählt werden. Bevorzugt sind die weiteren Proteine und/oder Proteinhydrolysate ausgewählt aus Milchproteinen, Molkenproteinen, Sojaproteinen, Weizenproteinen und deren Hydrolysaten, sowie weiteren Kollagenhydrolysaten. Bei Letzten handelt es sich insbesondere um solche Kollagenhydrolysate, die eine höhere oder andere Bioaktivität aufweisen als das zur Verbesserung der Textur enthaltene Kollagenhydrolysat mit einem mittleren Molekulargewicht von bis zu 1.700 Da.

Der Anteil des erfindungsgemäß vorgesehenen Kollagenhydrolysats, bezogen auf die Gesamtmenge an Proteinen und/oder Proteinhydrolysaten, liegt bei einer bevorzugten Ausführungsform der Erfindung im Bereich von 10 bis 70 Gew.%.

Weitere bevorzugte Bestandteile des erfindungsgemäßen Proteinriegels sind insbesondere solche Komponenten, deren Verwendung aus dem Stand der Technik bekannt ist.

Günstigerweise enthält die formbare Masse ferner ein oder mehrere pflanzliche Fette. Diese sind bevorzugt ausgewählt aus Kokosöl, Palmöl, Sonnenblumenöl und Kakaobutter. Der Anteil an pflanzlichen Fetten liegt typischerweise im Bereich von 5 bis 15 Gew.% der formbaren Masse.

Unter ernährungsphysiologischen Aspekten enthalten Proteinriegel typischerweise keine Zucker, d.h. Mono- und Disaccharide, auch wenn deren Zusatz im Rahmen der Erfindung nicht ausgeschlossen ist. Stattdessen ist es bevorzugt, wenn die formbare Masse ferner einen oder mehrere Zuckeraustauschstoffe enthält. Hierzu zählen insbesondere verschiedene Zuckeralkohole sowie unverdauliche Polysaccharide wie Oligofructose und Inulin. Der oder die Zuckeraustauschstoffe in dem erfindungsgemäßen Proteinriegel sind bevorzugt ausgewählt aus Glycerin, Sorbit und Oligofructose.

Die Verwendung von Glycerin ist auch deshalb bevorzugt, weil es in dem erfindungsgemäßen Proteinriegel als Feuchthaltemittel wirkt.

Schließlich kann die formbare Masse ferner einen oder mehrere Aromastoffe und/oder Süßstoffe enthalten.

Die Dichte der formbaren Masse (und des aus ihr gebildeten Proteinriegels) beträgt im Rahmen der vorliegenden Erfindung typischerweise 0,9 g/cm³ oder mehr, bevorzugt 1,0 g/cm³ oder mehr.

Bei einer bevorzugten Ausführungsform des erfindungsgemäßen Proteinriegels enthält die formbare Masse:
- 5 bis 50 Gew.% Kollagenhydrolysat, bevorzugt 30 bis 50 Gew.%;
- 0 bis 45 Gew.% weitere Proteine und/oder Proteinhydrolysate, bevorzugt 5 bis 30 Gew.%;
- 5 bis 15 Gew.% pflanzliches Fett;
- 5 bis 15 Gew.% Glycerin; und
- 5 bis 15 Gew.% Wasser.

Wie oben erwähnt, beziehen sich auch hier die Mengenanteile auf wasserfreies Kollagenhydrolysat bzw. weitere Proteine und/oder Proteinhydrolysate.

Der erfindungsgemäße Proteinriegel kann in verschiedenen Portionsgrößen hergestellt werden. Insbesondere kann der Proteinriegel ein Gewicht von 5 bis 100 g aufweisen, bevorzugt von 30 bis 60 g.

Die vorliegende Erfindung betrifft ferner die Verwendung von Kollagenhydrolysat mit einem mittleren Molekulargewicht von bis zu 1.700 Da zur Herstellung einer formbaren Masse für einen Proteinriegel.

Besondere Vorteile und bevorzugte Ausführungsformen der erfindungsgemäßen Verwendung wurden bereits im Zusammenhang mit dem erfindungsgemäßen Proteinriegel erläutert.

Diese und weitere Vorteile der Erfindung werden anhand der nachfolgenden Beispiele unter Bezugnahme auf die Figuren näher beschrieben. Es zeigen im Einzelnen:

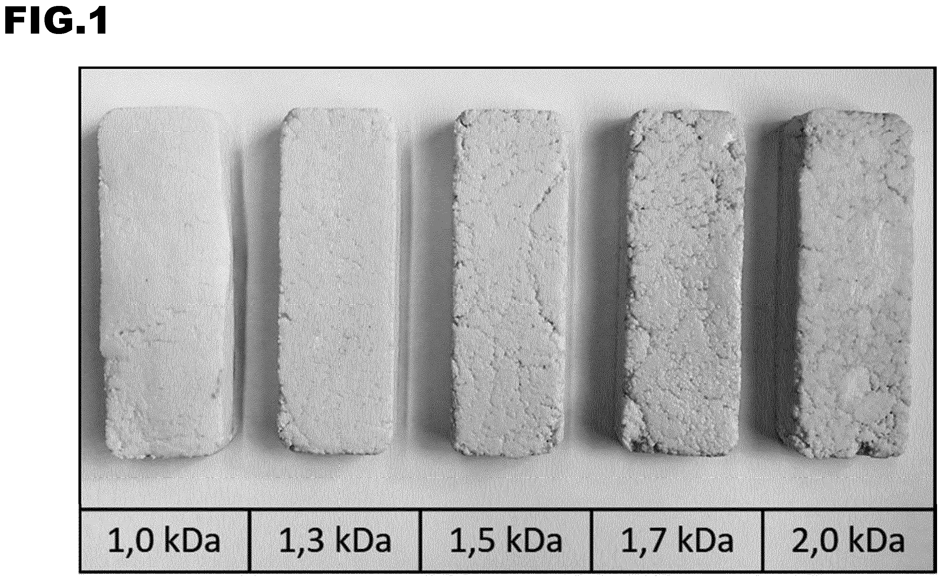

- Figur 1:: Fotografische Darstellung verschiedener Proteinriegel aus formbaren Massen mit verschiedenen Kollagenhydrolysaten.

### Beispiel 1

Um den Einfluss des mittleren Molekulargewichts des Kollagenhydrolysats auf die Formbarkeit und Textur von Proteinriegeln zu untersuchen, wurden fünf verschiedene Proteinriegel hergestellt aus formbaren Massen, die sich lediglich in der Art des eingesetzten Kollagenhydrolysats unterscheiden, und die in der Tabelle 1 angegebene Zusammensetzung aufweisen.

**Tabelle 1**

| Bestandteile | Einwaage in Gew.% |
|---|---|
| Kollagenhydrolysat | 40 |
| Milch- und Molkenproteine | 32 |
| Glycerin | 9 |
| Kakaobutter als pflanzliches Fett | 9 |
| Aroma, Sucralose | <1 |
| Wasser | 10 |

Aufgrund eines Wassergehaltes von jeweils etwa 10 Gew.% liegen die effektiven Mengenanteile in den formbaren Massen bei ca. 36 Gew.% Kollagenhydrolysat und ca. 29 Gew.% Milch- und Molkenproteinen.

Das mittlere Molekulargewicht des in den verschiedenen Formmassen A bis E enthaltenen Kollagenhydrolysats ist in der Tabelle 2 angegeben.

**Tabelle 2**

| Formmasse | **A** | **B** | **C** | **D** | **E** |
|---|---|---|---|---|---|
| mittleres MG in Da | 1.000 | 1.300 | 1.500 | 1.700 | 2.000 |

Aus jeweils 40 g der Formmassen A bis E wurden Proteinriegel A bis E mit einer Abmessung von ca. 9 cm · 3,5 cm · 1 cm geformt. Bei den Proteinriegeln A bis D handelt es sich somit um erfindungsgemäße Proteinriegel mit Molekulargewichten des Kollagenhydrolysats bis zu 1.700 Da, während es sich bei dem Proteinriegel E um ein Vergleichsbeispiel handelt.

Die hergestellten Proteinriegel A bis E weisen einen sehr hohen Gesamtproteinanteil von 65 Gew.% auf.

Die Figur 1 zeigt eine fotografische Darstellung der fünf Proteinriegel A bis E unter Angabe des mittleren Molekulargewichts des enthaltenen Kollagenhydrolysats. Es ist erkennbar, dass die Formbarkeit der Masse mit zunehmendem Molekulargewicht abnimmt, d.h. die hergestellten Proteinriegel zunehmen krümeliger werden. Dabei weist der Riegel A ersichtlich eine besonders homogene Struktur auf, bedingt durch die besonders gute Formbarkeit der Masse A.

Die Textur der Proteinriegel A bis E wurde außerdem mit einer Warner-Bratzler-Schneideinrichtung analysiert, wobei konkret ein Texture Analyzer TA.XTplus von Stable Micro Systems verwendet wurde. Bei dieser Texturanalyse wird die Probe auf eine Grundplatte gelegt und durch eine Schneide, die sich mit konstanter Geschwindigkeit nach unten bewegt, verformt bzw. durchtrennt. Es handelt sich um einen Standardtest in der Lebensmittelindustrie, mit dem das Bissverhalten eines Produktes simuliert werden soll, so dass das Testergebnis mit dem sensorischen Eindruck beim Verzehr korreliert.

Die Analyse wurde mit einer 7 cm breiten und 0,3 cm dicken Schneide durchgeführt, die sich mit einer Geschwindigkeit von 0,7 mm/s bis zu einer Verformung von 90% nach unten bewegt. Für jeden Proteinriegel wurden drei Messungen durchgeführt und hieraus der Mittelwert gebildet.

Als Messergebnis dieser Texturanalyse wird die maximal aufzuwendende Kraft in Gramm erhalten, die zur entsprechenden Verformung des Proteinriegels erforderlich ist. Die Ergebnisse für die Proteinriegel A bis E sind in der Tabelle 3 angegeben.

**Tabelle 3**

| Proteinriegel | **A** | **B** | **C** | **D** | **E** |
|---|---|---|---|---|---|
| 1. Messung | 1828 g | 2524 g | 2940 g | 4204 g | 5641 g |
| 2. Messung | 1814 g | 2457 g | 3206 g | 4820 g | 5296 g |
| 3. Messung | 1819 g | 2693 g | 2855 g | 4272 g | 4900 g |
| Mittelwert | **1820 g** | **2558 g** | **3000 g** | **4432 g** | **5279 g** |

Die starke Korrelation zwischen dem mittleren Molekulargewicht des Kollagenhydrolysats und der Festigkeit des Proteinriegels ist aus diesen Ergebnissen deutlich zu erkennen. Für eine sensorisch akzeptable Textur sollte bei einem derartigen Riegel der Messwert unterhalb von etwa 5000 g liegen. Oberhalb dieses Wertes ist der Proteinriegel so fest, dass er als ungenießbar anzusehen ist. Diese Vorgabe wird von den erfindungsgemäßen Proteinriegeln A bis D erfüllt, nicht jedoch von dem Vergleichsbeispiel E.

Die Beispiele zeigen somit, dass durch den erfindungsgemäßen Zusatz eines Kollagenhydrolysats mit einem mittleren Molekulargewicht von bis zu 1.700 Da die Herstellung eines Proteinriegels auch mit einem hohen Gesamtproteinanteil möglich ist, der eine weiche, für den Verbraucher annehmbare Textur aufweist.

### Beispiel 2

Während die formbaren Massen für die Proteinriegel gemäß dem Beispiel 1 im Labormaßstab in einem Ansatz von jeweils 300 g hergestellt wurden, zeigt das vorliegende Beispiel die Herstellung von Proteinriegeln auf einer Kleinserienanlage. Hierfür wurde eine formbare Masse mit einem Kollagenhydrolysat mit einem mittleren Molekulargewicht von 1.200 Da in einem Ansatz von 3.000 g hergestellt, mit der in der Tabelle 4 angegebenen Zusammensetzung.

**Tabelle 4**

| Bestandteile | Einwaage in Gew.% |
|---|---|
| Kollagenhydrolysat mit 1.200 Da | 42 |
| Milch- und Molkenproteine | 31 |
| Glycerin | 7 |
| Kakaobutter als pflanzliches Fett | 7 |
| Aroma, Sucralose, Kakaopulver | <1 |
| Wasser | 12 |

Unter Berücksichtigung der jeweiligen Wassergehalte liegt der effektive Mengenanteil an Proteinen und/oder Proteinhydrolysaten bei etwa 66 Gew.% der formbaren Masse.

Die Masse konnte auf einer Kleinserienanlage trotz des hohen Proteinanteils mit einer guten Formbarkeit zu Proteinriegeln verarbeitet werden. Dies zeigt, dass erfindungsgemäße Proteinriegel mit einem hohen Proteingehalt unter realen Produktionsbedingungen hergestellt werden können.

### Beispiel 3

Proteinriegel mit einem etwas geringeren Gesamtproteinanteil wurden unter Verwendung von zwei verschiedenen Kollagenhydrolysaten im Labormaßstab hergestellt (Ansatz 300 g). Die Zusammensetzung der formbaren Masse ist in der Tabelle 5 angegeben.

**Tabelle 5**

| Bestandteile | Einwaage in Gew.% |
|---|---|
| Kollagenhydrolysat | 20 |
| Milch- und Molkenproteine | 37 |
| Maltodextrin | 11 |
| Glycerin | 10 |
| Kokosfett | 10 |
| Kakaopulver | 2 |
| Aroma, Sucralose | <1 |
| Wasser | 10 |

Nach Abzug des Wassergehaltes beträgt die effektive Gesamtmenge an Proteinen und/oder Proteinhydrolysaten in diesem Beispiel etwa 51 Gew.%.

In der obigen Rezeptur wurde für die Formmasse F (Vergleichsbeispiel) ein Kollagenhydrolysat mit einem mittleren Molekulargewicht von 3.000 Da eingesetzt, und für die Formmasse G gemäß der Erfindung ein Kollagenhydrolysat mit einem mittleren Molekulargewicht von 1.200 Da.

Für beide Massen wurde jeweils die Formbarkeit bei der Herstellung eines Riegels beurteilt, eine Texturanalyse durchgeführt (wie im Beispiel 1 beschrieben), und die Dichte der Formmasse bestimmt. Die Ergebnisse sind in der Tabelle 6 dargestellt.

**Tabelle 6**

| Formmasse/Riegel | **F** | **G** |
|---|---|---|
| mittleres MG des Kollagenhydrolysats | 3.000 Da | 1.200 Da |
| Formbarkeit | gut | besser (weicher) |
| Texturanalyse (Mittelwert aus drei Messungen) | 3580 g | 2670 g |
| Dichte | 1,01 g/cm³ | 1,03 g/cm³ |

Dieses Beispiel zeigt, dass sich bei einem niedrigeren Gesamtproteinanteil auch unter Verwendung eines höhermolekularen Kollagenhydrolysats Proteinriegel mit einer akzeptablen Formbarkeit und Textur herstellen lassen. Auch in diesem Fall können diese Eigenschaften aber durch Einsatz eines niedermolekularen Kollagenhydrolysats gemäß der vorliegenden Erfindung nochmals deutlich verbessert werden.

## Patentansprüche

1. Proteinriegel, der aus einer formbaren Masse gebildet ist, die Proteine und/oder Proteinhydrolysate enthält und eine Dichte von 0,9 g/cm³ oder mehr aufweist,
**dadurch gekennzeichnet, dass** die formbare Masse ein Kollagenhydrolysat mit einem mittleren Molekulargewicht von bis zu 1.700 Da als ein Proteinhydrolysat enthält.

2. Proteinriegel nach Anspruch 2, wobei das Kollagenhydrolysat ein mittleres Molekulargewicht von 800 bis 1.700 Da aufweist, bevorzugt von 1.000 bis 1.500 Da.

3. Proteinriegel nach einem der vorhergehenden Ansprüche, wobei das Kollagenhydrolysat durch enzymatische Hydrolyse eines kollagenhaltigen Ausgangsmaterials hergestellt ist.

4. Proteinriegel nach Anspruch 3, wobei das kollagenhaltige Ausgangsmaterial ausgewählt ist aus Haut oder Knochen von Wirbeltieren, bevorzugt von Säugetieren, Vögeln oder Fischen, insbesondere aus Haut von Rindern oder Schweinen.

5. Proteinriegel nach Anspruch 1 oder 2, wobei das Kollagenhydrolysat durch rekombinante Genexpression hergestellt ist.

6. Proteinriegel nach einem der vorhergehenden Ansprüche, wobei der Anteil des Kollagenhydrolysat in der formbaren Masse im Bereich von 5 bis 50 Gew.% liegt, bevorzugt im Bereich von 30 bis 50 Gew.%.

7. Proteinriegel nach einem der vorhergehenden Ansprüche, wobei die formbare Masse eine Gesamtmenge an Proteinen und/oder Proteinhydrolysaten von mindestens 50 Gew.% der formbaren Masse enthält, bevorzugt von mindestens 60 Gew.%, weiter bevorzugt von mindestens 65 Gew.%.

8. Proteinriegel nach einem der vorhergehenden Ansprüche, wobei die formbare Masse neben dem Kollagenhydrolysat ein oder mehrere Proteine und/oder Proteinhydrolysate enthält, die bevorzugt ausgewählt sind aus Milchproteinen, Molkenproteinen, Sojaproteinen, Weizenproteinen und deren Hydrolysaten, sowie weiteren Kollagenhydrolysaten.

9. Proteinriegel nach einem der vorhergehenden Ansprüche, wobei der Anteil des Kollagenhydrolysats, bezogen auf die Gesamtmenge an Proteinen und/oder Proteinhydrolysaten, im Bereich von 10 bis 70 Gew.% liegt.

10. Proteinriegel nach einem der vorhergehenden Ansprüche, wobei die formbare Masse ferner ein oder mehrere pflanzliche Fette enthält, die bevorzugt ausgewählt sind aus Kokosöl, Palmöl, Sonnenblumenöl und Kakaobutter.

11. Proteinriegel nach einem der vorhergehenden Ansprüche, wobei die formbare Masse ferner einen oder mehrere Zuckeraustauschstoffe enthält, die bevorzugt ausgewählt sind aus Glycerin, Sorbit und Oligofructose; und/oder wobei die formbare Masse ferner einen oder mehrere Aromastoffe und/oder Süßstoffe enthält.

12. Proteinriegel nach einem der vorhergehenden Ansprüche, wobei die formbare Masse eine Dichte von 1,0 g/cm³ oder mehr aufweist

13. Proteinriegel nach einem der vorhergehenden Ansprüche, wobei die formbare Masse enthält:
- 5 bis 50 Gew.% Kollagenhydrolysat, bevorzugt 30 bis 50 Gew.%;
- 0 bis 45 Gew.% weitere Proteine und/oder Proteinhydrolysate, bevorzugt 5 bis 30 Gew.%;
- 5 bis 15 Gew.% pflanzliches Fett;
- 5 bis 15 Gew.% Glycerin; und
- 5 bis 15 Gew.% Wasser.

14. Proteinriegel nach einem der vorhergehenden Ansprüche, wobei der Proteinriegel ein Gewicht von 5 bis 100 g aufweist, bevorzugt von 30 bis 60 g.

15. Verwendung von Kollagenhydrolysat mit einem mittleren Molekulargewicht von bis zu 1.700 Da zur Herstellung einer formbaren Masse mit einer Dichte von 0,9 g/cm³ oder mehr für einen Proteinriegel.

## Claims

1. A protein bar that is formed from a mouldable mixture containing proteins and/or protein hydrolysates and having a density of 0.9 g/cm³ or more,
**characterised in that** the mouldable mixture contains a collagen hydrolysate having an average molecular weight of up to 1 700 Da as a protein hydrolysate.

2. A protein bar according to Claim 1, wherein the collagen hydrolysate has an average molecular weight of 800 to 1 700 Da, preferably 1 000 to 1 500 Da.

3. A protein bar according to one of the preceding claims, wherein the collagen hydrolysate is produced by enzymatic hydrolysis of a collagen-containing starting material.

4. A protein bar according to Claim 3, wherein the collagen-containing starting material is selected from the skin or bones of vertebrates, preferably mammals, birds or fish, in particular from the skin of cattle or pigs.

5. A protein bar according to Claim 1 or 2, wherein the collagen hydrolysate is produced by recombinant gene expression.

6. A protein bar according to one of the preceding claims, wherein the proportion of collagen hydrolysate in the mouldable mixture is in the range of 5 to 50 weight%, preferably in the range of 30 to 50 weight%.

7. A protein bar according to one of the preceding claims, wherein the mouldable mixture contains a total quantity of proteins and/or protein hydrolysates of at least 50 weight% of the mouldable mixture, preferably at least 60 weight%, more preferably at least 65 weight%.

8. A protein bar according to one of the preceding claims, wherein in addition to collagen hydrolysate the mouldable mixture contains one or more proteins and/or protein hydrolysates, which are preferably selected from milk proteins, whey proteins, soy proteins, wheat proteins and the hydrolysates thereof, and further collagen hydrolysates.

9. A protein bar according to one of the preceding claims, wherein the proportion of collagen hydrolysate in relation to the total quantity of proteins and/or protein hydrolysates is in the range of 10 to 70 weight%.

10. A protein bar according to one of the preceding claims, wherein the mouldable mixture further contains one or more vegetable fats, preferably selected from coconut oil, palm oil, sunflower oil and cocoa butter.

11. A protein bar according to one of the preceding claims, wherein the mouldable mixture further contains one or more sugar substitutes, preferably selected from glycerol, sorbitol and oligofructose; and/or wherein the mouldable mixture further contains one or more flavourings and/or sweeteners.

12. A protein bar according to one of the preceding claims, wherein the mouldable mixture has a density of 1.0 g/cm³ or more.

13. A protein bar according to one of the preceding claims, wherein the mouldable mixture contains:
- 5 to 50 weight% of collagen hydrolysate, preferably 30 to 50 weight%;
- 0 to 45 weight% of further proteins and/or protein hydrolysates, preferably 5 to 30 weight%;
- 5 to 15 weight% of vegetable fat;
- 5 to 15 weight% of glycerol; and
- 5 to 15 weight% of water.

14. A protein bar according to one of the preceding claims, wherein the protein bar has a weight of 5 to 100 g, preferably 30 to 60 g.

15. Use of collagen hydrolysate having an average molecular weight of up to 1 700 Da for producing a mouldable mixture with a density of 0.9 g/cm³ or more for a protein bar.

## Revendications

1. Barre protéinée, qui est formée à partir d'une masse malléable, qui contient des protéines et/ou des hydrolysats de protéines, et qui présente une densité de 0,9 g/cm³ ou plus,
**caractérisée en ce que** la masse malléable contient un hydrolysat de collagène d'un poids moléculaire moyen allant jusqu'à 1700 Da en tant qu'hydrolysat de protéine.

2. Barre protéinée selon la revendication 1, dans laquelle l'hydrolysat de collagène présente un poids moléculaire moyen de 800 à 1700 Da, de manière préférée de 1000 à 1500 Da.

3. Barre protéinée selon l'une quelconque des revendications précédentes, dans laquelle l'hydrolysat de collagène est fabriqué par hydrolyse enzymatique d'un matériau de départ contenant du collagène.

4. Barre protéinée selon la revendication 3, dans laquelle le matériau de départ contenant du collagène est choisi parmi la peau ou les os d'animaux vertébrés, de manière préférée de mammifères, d'oiseaux ou de poissons, en particulier parmi la peau de bovins ou de porcs.

5. Barre protéinée selon la revendication 1 ou 2, dans laquelle l'hydrolysat de collagène est fabriqué par expression génique recombinante.

6. Barre protéinée selon l'une quelconque des revendications précédentes, dans laquelle la proportion de l'hydrolysat de collagène dans la masse malléable se situe dans la plage de 5 à 50 % en poids, de manière préférée dans la plage de 30 à 50 % en poids.

7. Barre protéinée selon l'une quelconque des revendications précédentes, dans laquelle la masse malléable contient une quantité totale de protéines et/ou d'hydrolysats de protéines d'au moins 50 % en poids de la masse malléable, de manière préférée d'au moins 60 % en poids, de manière davantage préférée d'au moins 65 % en poids.

8. Barre protéinée selon l'une quelconque des revendications précédentes, dans laquelle la masse malléable contient, outre l'hydrolysat de collagène, une ou plusieurs protéines et/ou hydrolysats de protéines, qui sont choisis de manière préférée parmi des protéines de lait, des protéines de lactosérum, des protéines de soja, des protéines de blé et leurs hydrolysats, ainsi que d'autres hydrolysats de collagène.

9. Barre protéinée selon l'une quelconque des revendications précédentes, dans laquelle la proportion de l'hydrolysat de collagène, par rapport à la quantité totale de protéines et/ou d'hydrolysats de protéines, se situe dans la plage de 10 à 70 % en poids.

10. Barre protéinée selon l'une quelconque des revendications précédentes, dans laquelle la masse malléable contient en outre une ou plusieurs graisses végétales qui sont choisies de manière préférée parmi l'huile de coco, l'huile de palme, l'huile de tournesol et le beurre de cacao.

11. Barre protéinée selon l'une quelconque des revendications précédentes, dans laquelle la masse malléable contient en outre un ou plusieurs substituts de sucre, qui sont choisis de manière préférée parmi la glycérine, le sorbitol et l'oligofructose ; et/ou dans laquelle la masse malléable contient en outre un ou plusieurs arômes et/ou édulcorants.

12. Barre protéinée selon l'une quelconque des revendications précédentes, dans laquelle la masse malléable présente une densité de 1,0 g/cm³ ou plus.

13. Barre protéinée selon l'une quelconque des revendications précédentes, dans laquelle la masse malléable contient :
- 5 à 50 % en poids d'hydrolysat de collagène, de manière préférée de 30 à 50 % en poids ;
- 0 à 45 % en poids d'autres protéines et/ou d'hydrolysats de protéines, de manière préférée de 5 à 30 % en poids ;
- 5 à 15 % en poids de matière grasse végétale ;
- 5 à 15 % en poids de glycérine ; et
- 5 à 15 % en poids d'eau.

14. Barre protéinée selon l'une quelconque des revendications précédentes, dans laquelle la barre protéinée présente un poids de 5 à 100 g, de manière préférée de 30 à 60 g.

15. Utilisation d'hydrolysat de collagène d'un poids moléculaire moyen allant jusqu'à 1700 Da pour produire une masse malléable d'une densité de 0,9 g/cm³ ou plus pour une barre protéinée.
